(19) Europäisches Patentamt
European Patent Office
Office européen des brevets

(11) EP 4 291 566 B1

(12) EUROPEAN PATENT SPECIFICATION

(45) Date of publication and mention of the grant of the patent:
**24.09.2025 Bulletin 2025/39**

(21) Application number: **22706179.3**

(22) Date of filing: **08.02.2022**

(51) International Patent Classification (IPC):
***C08F 4/659*** *(2006.01)* ***C07F 17/00*** *(2006.01)*
***C08F 4/6592*** *(2006.01)* ***C08F 210/16*** *(2006.01)*

(52) Cooperative Patent Classification (CPC):
(C-Sets available)
**C07F 17/00; C08F 4/65916; C08F 4/65925; C08F 210/16;** C08F 2420/03 (Cont.)

(86) International application number:
**PCT/US2022/015589**

(87) International publication number:
**WO 2022/173723 (18.08.2022 Gazette 2022/33)**

# (54) HAFNIUM METALLOCENES HAVING NONIDENTICAL LIGANDS

HAFNIUM-METALLOCENE MIT UNGLEICHEN LIGANDEN

MÉTALLOCÈNES D'HAFNIUM AYANT DES LIGANDS NON IDENTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2021 US 202163147477 P**

(43) Date of publication of application:
**20.12.2023 Bulletin 2023/51**

(73) Proprietor: **Dow Global Technologies LLC**
**Midland, MI 48674 (US)**

(72) Inventors:
- **BAILLIE, Rhett A.**
  **Lake Jackson, Texas 77566 (US)**
- **KUHLMAN, Roger L.**
  **Lake Jackson, Texas 77566 (US)**
- **PADILLA-ACEVEDO, Angela I.**
  **Lake Jackson, Texas 77566 (US)**
- **MCDOUGAL, Mahsa**
  **Freeport, Texas 77541 (US)**
- **BRENNAN, Tamara L.**
  **Lake Jackson, Texas 77566 (US)**
- **PEARSON, David M.**
  **Lake Jackson, Texas 77566 (US)**
- **WHITED, Stephanie M.**
  **Charleston, West Virginia 25303 (US)**

(74) Representative: **Boult Wade Tennant LLP**
**Salisbury Square House**
**8 Salisbury Square**
**London EC4Y 8AP (GB)**

(56) References cited:
**EP-B1- 3 105 259**
**WO-A1-2016/145179**
**WO-A1-2018/213395**
**WO-A2-2008/010865**
**US-A1- 2011 130 531**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/34;**
**C08F 210/16, C08F 4/65925;**
**C08F 210/16, C08F 210/14, C08F 2500/27,**
**C08F 2500/12, C08F 2500/06, C08F 2500/10**

## Description

### Field of Disclosure

Embodiments of the present disclosure are directed towards hafnium metallocenes having nonidentical ligands, spray-dried compositions including hafnium metallocenes having nonidentical ligands, and methods utilizing spray-dried compositions including hafnium metallocenes having nonidentical ligands are discussed herein.

### Background

Metallocenes can be used in various applications, including as polymerization catalysts. Polymers may be utilized for a number of products including films, among others. Polymers can be formed by reacting one or more types of monomer in a polymerization reaction. There is continued focus in the industry on developing new and improved materials and/or processes that may be utilized to form polymers.

### Summary

The present disclosure provides various embodiments, including the following.

A spray-dried hafnium metallocene composition comprising:

a hafnium metallocene having nonidentical ligands represented by the formula $ABMX_2$ , where: A is a substituted cyclopentadienyl ring and B is a substituted cyclopentadienyl ring, wherein substitution of the cyclopentadienyl ring of A is different than the substitution of the cyclopentadienyl ring of B; M is hafnium; and X is a leaving group; an activator; and a support.

A method of making a polymer, the method comprising: contacting the spray-dried hafnium metallocene composition and an olefin under polymerization conditions to make the polymer.

### Brief Description of the Drawings

Figure 1 shows molecular weight comonomer distribution index (MWCDI) in accordance a number of embodiments of the present disclosure.

### Detailed Description

Hafnium metallocenes having nonidentical ligands are discussed herein. Advantageously, these hafnium metallocenes having nonidentical ligands can be utilized to make spray-dried compositions. These spray-dried compositions can be utilized to make polymers having an improved, i.e. greater, molecular weight comonomer distribution index (MWCDI) as compared to polymers having a similar density, e.g. $\pm$ 0.01 g/cm$^3$, made from other hafnium metallocenes. These polymers are desirable for a number of applications, including films, among others. As such, providing an improved MWCDI is advantageous. Further, the spray-dried compositions disclosed herein can be utilized to make polymers desirably having an improved, e.g. greater, weight average molecular weight ($M_w$) to number average molecular weight ($M_n$) ratio (Mw/Mn), and/or an improved, e.g., reduced, melt index ($I_{21}$), as compared to polymers made from other hafnium metallocenes. Such polymers are advantageous for a number of applications.

The hafnium metallocenes having nonidentical ligands, which can be utilized for the spray-dried compositions disclosed herein, can be represented by formula (I): $ABMX_2$, where: A is a substituted cyclopentadienyl ring and B is a substituted cyclopentadienyl ring; M is hafnium; and X is a leaving group. Embodiments of the present disclosure provide that A is different than B, and as such, the hafnium metallocenes are referred to as having nonidentical ligands.

For formula (I) $ABMX_2$, A is a substituted cyclopentadienyl ring. Non-limiting examples of substituent groups include groups include alkyls. The substituent group may be a linear alkyl or a branched alkyl. More particular non-limiting examples of alkyl substituents include methyl, ethyl, propyl, and n-butyl. One or more embodiments provide that the cyclopentadienyl ring of A is a $((C_1\text{-}C_4)alkyl)_n$-substituted cyclopentadienyl ring wherein subscript n is 1, 2, or 3, wherein the $C_4$ alkyl is n-butyl. One or more embodiments provide that the cyclopentadienyl ring of A is a $((C_1\text{-}C_4)alkyl)_n$-substituted cyclopentadienyl ring wherein subscript n is 1, 2, or 3, wherein the $C_3$ alkyl is n-propyl or i-propyl, and the $C_4$ alkyl is n-butyl. One or more embodiments provide that the cyclopentadienyl ring of A is substituted with only one alkyl having from 1 to 3 carbons; in other words, the cyclopentadienyl ring of A has no other substitutions other than the one alkyl having from 1 to 3 carbons. One or more embodiments provide that the cyclopentadienyl ring of A is substituted with only one alkyl having from 1 to 2 carbons. One or more embodiments provide that the cyclopentadienyl ring of A is substituted with only one alkyl having 3 carbons. One or more embodiments provide that the cyclopentadienyl ring of A is substituted with only one linear alkyl having 3 carbons. One or more embodiments provide that the cyclopentadienyl ring of A is substituted with only one

linear alkyl having 4 carbons, i.e. n-butyl.

For formula (I) $ABMX_2$, B is a substituted cyclopentadienyl ring. As mentioned, embodiments of the present disclosure provide that A is different than B; in other words the substitution of the cyclopentadienyl ring of A is different than the substitution of the cyclopentadienyl ring of B. Non-limiting examples of substituent groups include alkyls. One or more embodiments provide that the cyclopentadienyl ring of B is a $((C_1\text{-}C_2)alkyl)_n$-substituted cyclopentadienyl ring wherein subscript n is 1, 2, or 3, such that, as previously mentioned, the substitution of the cyclopentadienyl ring of A is different than the substitution of the cyclopentadienyl ring of B. More particular non-limiting examples of alkyl substituents include methyl and ethyl. One or more embodiments provide that the cyclopentadienyl ring of B is substituted with only one alkyl having from 1 to 2 carbons. One or more embodiments provide that the cyclopentadienyl ring of B is substituted with only one alkyl having 1 carbon.

One example of the hafnium metallocene having nonidentical ligands of formula (I): $ABMX_2$, where: A is a substituted cyclopentadienyl ring and B is a substituted cyclopentadienyl ring; M is hafnium; and X is a leaving group can be represented by structure (I):

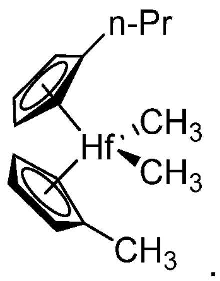

As represented in the above structure (I), A is substituted with only one alkyl having 3 carbons, i.e. n-propyl, and B is substituted with only one alkyl having 1 carbon.

As mentioned, for formula (I) $ABMX_2$, X is a leaving group. One or more embodiments provide that X is selected from alkyls, aryls, hydridos, and halogens. One or more embodiments provide that X is methyl.

Examples of X include halogen ions, hydrides, $C_1$ to $C_{12}$ alkyls, $C_2$ to $C_{12}$ alkenyls, $C_6$ to $C_{12}$ aryls, $C_7$ to $C_{20}$ alkylaryls, $C_1$ to $C_{12}$ alkoxys, $C_6$ to $C1_{16}$ aryloxys, $C_7$ to $C_8$ alkylaryloxys, $C_1$ to $C_{12}$ fluoroalkyls, $C_6$ to $C_{12}$ fluoroaryls, and $C_1$ to $C_{12}$ heteroatom-containing hydrocarbons and substituted derivatives thereof; one or more embodiments include hydrides, halogen ions, $C_1$ to $C_6$ alkyls, $C_2$ to $C_6$ alkenyls, $C_7$ to $C_{18}$ alkylaryls, $C_1$ to $C_6$ alkoxys, $C_6$ to $C_{14}$ aryloxys, $C_7$ to $C_{16}$ alkylaryloxys, $C_1$ to $C_6$ alkylcarboxylates, $C_1$ to $C_6$ fluorinated alkylcarboxylates, $C_6$ to $C_{12}$ arylcarboxylates, $C_7$ to $C_{18}$ alkylarylcarboxylates, $C_1$ to $C_6$ fluoroalkyls, $C_2$ to $C_6$ fluoroalkenyls, and $C_7$ to $C_{18}$ fluoroalkylaryls; one or more embodiments include hydride, chloride, fluoride, methyl, phenyl, phenoxy, benzoxy, tosyl, fluoromethyls and fluorophenyls; one or more embodiments include $C_1$ to $C_{12}$ alkyls, $C_2$ to $C_{12}$ alkenyls, $C_6$ to $C_{12}$ aryls, $C_7$ to $C_{20}$ alkylaryls, substituted $C_1$ to $C_{12}$ alkyls, substituted $C_6$ to $C_{12}$ aryls, substituted $C_7$ to $C_{20}$ alkylaryls, and $C_1$ to $C_{12}$ heteroatom-containing alkyls, $C_1$ to $C_{12}$ heteroatom-containing aryls, and $C_1$ to $C_{12}$ heteroatom-containing alkylaryls; one or more embodiments include chloride, fluoride, $C_1$ to $C_6$ alkyls, $C_2$ to $C_6$ alkenyls, $C_7$ to $C_{18}$ alkylaryls, halogenated $C_1$ to $C_6$ alkyls, halogenated $C_2$ to $C_6$ alkenyls, and halogenated $C_7$ to $C_{18}$ alkylaryls; one or more embodiments include fluoride, methyl, ethyl, propyl, phenyl, methylphenyl, dimethylphenyl, trimethylphenyl, fluoromethyls (mono-, di- and trifluoromethyls) and fluorophenyls (mono-, di-, tri-, tetra- and pentafluorophenyls).

Other non-limiting examples of X groups include amines, phosphines, ethers, carboxylates, dienes, hydrocarbon radicals having from 1 to 20 carbon atoms, fluorinated hydrocarbon radicals, e.g., $-C_6F_5$ (pentafluorophenyl), fluorinated alkylcarboxylates, e.g., $CF_3C(O)O-$, hydrides, halogen ions and combinations thereof. Other examples of X ligands include alkyl groups such as cyclobutyl, cyclohexyl, methyl, heptyl, tolyl, trifluoromethyl, tetramethylene, pentamethylene, methylidene, methyoxy, ethyoxy, propoxy, phenoxy, bis(N-methylanilide), dimethylamide, and dimethylphosphide radicals, among others. In one embodiment, two or more X's form a part of a fused ring or ring system. In one or more embodiments, X can be a leaving group selected from the group consisting of chloride ions, bromide ions, $C_1$ to $C_{10}$ alkyls, $C_2$ to $C_{12}$ alkenyls, carboxylates, acetylacetonates, and alkoxides. In one or more embodiments, X is methyl.

The hafnium metallocenes having nonidentical ligands discussed herein can be made by processes, i.e. with conventional solvents, reaction conditions, reaction times, and isolation procedures, utilized for making known metallocenes.

As used herein, all reference to the Periodic Table of the Elements and groups thereof is to the NEW NOTATION published in HAWLEY'S CONDENSED CHEMICAL DICTIONARY, Thirteenth Edition, John Wiley & Sons, Inc., (1997) (reproduced there with permission from IUPAC), unless reference is made to the Previous IUPAC form noted with Roman numerals (also appearing in the same), or unless otherwise noted.

As used herein, an "alkyl" includes linear and branched radicals that are deficient by one hydrogen. Thus, for

example, $CH_3$ ("methyl") and $CH_2CH_3$ ("ethyl") are examples of alkyls.

As used herein, an "alkenyl" includes linear and branched radicals that are deficient by one hydrogen; alkynyl radicals include linear, branched and cyclic acetylene radicals deficient by one hydrogen radical.

As used herein, "aryl" groups include phenyl, naphthyl, pyridyl and other radicals whose molecules have the ring structure characteristic of benzene, naphthylene, phenanthrene, anthracene, etc. It is understood that an "aryl' group can be a $C_6$ to $C_{20}$ aryl group. For example, a $C_6H_5$ aromatic structure is an "phenyl", a $C_6H_4$ 2 aromatic structure is an "phenylene". An "arylalkyl" group is an alkyl group having an aryl group pendant therefrom. It is understood that an "aralkyl" group can be a $C_7$ to $C_{20}$ aralkyl group. An "alkylaryl" is an aryl group having one or more alkyl groups pendant therefrom.

As used herein, an "alkylene" includes linear, branched and cyclic hydrocarbon radicals deficient by two hydrogens. Thus, $CH_2$ ("methylene") and $CH_2CH_2$ ("ethylene") are examples of alkylene groups. Other groups deficient by two hydrogen radicals include "arylene" and "alkenylene".

As used herein, the term "heteroatom" includes any atom selected from the group consisting of B, Al, Si, Ge, N, P, O, and S. A "heteroatom-containing group" is a hydrocarbon radical that contains a heteroatom and may contain one or more of the same or different heteroatoms, and from 1 to 3 heteroatoms in a particular embodiment. Non-limiting examples of heteroatom-containing groups include radicals (monoradicals and diradicals) of imines, amines, oxides, phosphines, ethers, ketones, oxoazolines heterocyclics, oxazolines, and thioethers.

As used herein, the term "substituted" means that one or more hydrogen atoms in a parent structure has been independently replaced by a substituent atom or group.

As mentioned, the hafnium metallocenes having nonidentical ligands can be utilized to make spray-dried compositions. As used herein, "spray-dried composition" refers to a composition that includes a number of components that have undergone a spray-drying process. Various spray-drying process are known in the art and are suitable for forming the spray-dried compositions disclosed herein. One or more embodiments provide that the spray-dried composition comprises a trim composition.

In one or more embodiments, the spray-drying process may comprise atomizing a composition including the hafnium metallocene having nonidentical ligands. A number of other known components may be utilized in the spray-drying process. An atomizer, such as an atomizing nozzle or a centrifugal high speed disc, for example, may be used to create a spray or dispersion of droplets of the composition. The droplets of the composition may then be rapidly dried by contact with an inert drying gas. The inert drying gas may be any gas that is non-reactive under the conditions employed during atomization, such as nitrogen, for example. The inert drying gas may meet the composition at the atomizer, which produces a droplet stream on a continuous basis. Dried particles of the composition may be trapped out of the process in a separator, such as a cyclone, for example, which can separate solids formed from a gaseous mixture of the drying gas, solvent, and other volatile components.

A spray-dried composition may have the form of a free-flowing powder, for instance. After the spray-drying process, the spray-dried composition and a number of known components may be utilized to form a slurry. The spray-dried composition may be utilized with a diluent to form a slurry suitable for use in olefin polymerization, for example. In one or more embodiments, the slurry may be combined with one or more additional catalysts or other known components prior to delivery into a polymerization reactor.

Spray-dried hafnium metallocenes are known from US2011/130531, WO2016/145179 and EP3105259, all disclosing inter alia [(nPr)Cp)2HfMe2] as polymerization catalyst.

In one or more embodiments, the spray-dried composition may be formed by contacting a spray dried activator particle, such as spray dried MAO, with a solution of the hafnium metallocene having nonidentical ligands. Such a solution of hafnium metallocene having nonidentical ligands typically may be made in an inert hydrocarbon solvent, for instance, and is sometimes called a trim solution. Such a spray-dried composition comprised of contacting a trim solution of the hafnium metallocene having nonidentical ligands with a spray dried activator particle, such as spray-dried MAO, may be made *in situ* in a feed line heading into a gas phase polymerization reactor by contacting the trim solution with a slurry, typically in mineral oil, of the spray-dried activator particle.

Various spray-drying conditions may be utilized for different applications. For instance, the spray-drying process may utilize a drying temperature from 115 to 185 °C. Various sizes of orifices of the atomizing nozzle employed during the spray-drying process may be utilized to obtain different particle sizes. Alternatively, for other types of atomizers such as discs, rotational speed, disc size, and number/size of holes may be adjusted to obtain different particle sizes. One or more embodiments provide that a filler may be utilized in the spray-drying process. Different fillers and amounts thereof may be utilized for various applications.

The hafnium metallocenes having nonidentical ligands, e.g., the spray-dried hafnium metallocene composition, may be utilized to make a polymer. For instance, the hafnium metallocenes having nonidentical ligands may be activated, i.e. with an activator, to make a hafnium metallocene catalyst. One or more embodiments provide that the spray-dried compositions include an activator. As used herein, "activator" refers to any compound or combination of compounds, supported, or unsupported, which can activate a complex or a catalyst component, such as by creating a cationic species of the catalyst component, e.g., to provide the catalyst. The activator may also be referred to as a "co-catalyst". The

activator can include a Lewis acid or a non-coordinating ionic activator or ionizing activator, or any other compound including Lewis bases, aluminum alkyls, and/or conventional-type co-catalysts. Activators include methylaluminoxane (MAO) and modified methylaluminoxane (MMAO),among others. One or more embodiments provide that the activator is methylaluminoxane. Activating conditions are well known in the art. Known activating conditions may be utilized.

A molar ratio of metal, e.g., aluminum, in the activator to hafnium in the hafnium metallocene having nonidentical ligands may be 1500: 1 to 0.5: 1, 300: 1 to 1 : 1, or 150: 1 to 1 : 1. One or more embodiments provide that the molar ratio of in the activator to hafnium in the hafnium metallocene having nonidentical ligands is at least 75:1. One or more embodiments provide that the molar ratio of in the activator to hafnium in the hafnium metallocene having nonidentical ligands is at least 100:1. One or more embodiments provide that the molar ratio of in the activator to hafnium in the hafnium metallocene having nonidentical ligands is at least 150:1.

The hafnium metallocenes having nonidentical ligands, as well as a number of other components discussed herein, can be supported on the same or separate supports, or one or more of the components may be used in an unsupported form. Utilizing the support may be accomplished by any technique used in the art. One or more embodiments provide that the spray-dry process is utilized. The support may be functionalized. One or more embodiments provide that the spray-dried compositions include a support.

A "support", which may also be referred to as a "carrier", refers to any support material, including a porous support material, such as talc, inorganic oxides, and inorganic chlorides. Other support materials include resinous support materials, e.g., polystyrene, functionalized or crosslinked organic supports, such as polystyrene divinyl benzene polyolefins or polymeric compounds, zeolites, clays, or any other organic or inorganic support material and the like, or mixtures thereof.

Support materials include inorganic oxides that include Group 2, 3, 4, 5, 13 or 14 metal oxides. Some preferred supports include silica, fumed silica, alumina, silica-alumina, and mixtures thereof. Some other supports include magnesia, titania, zirconia, magnesium chloride, montmorillonite, phyllosilicate, zeolites, talc, clays, and the like. Also, combinations of these support materials may be used, for example, silica-chromium, silica-alumina, silica-titania and the like. Additional support materials may include porous acrylic polymers, nanocomposites, aerogels, spherulites, and polymeric beads. An example of a support is fumed silica available under the trade name Cabosil™ TS- 610, or other TS- or TG-series supports, available from Cabot Corporation. Fumed silica is typically a silica with particles 7 to 30 nanometers in size that has been treated with dimethylsilyldichloride such that a majority of the surface hydroxyl groups are capped.

The hafnium metallocenes having nonidentical ligands, e.g., the spray-dried hafnium metallocene compositions, and an olefin can be contacted under polymerization conditions to make a polymer, e.g., a polyolefin polymer. The polymerization process may be a suspension polymerization process, a slurry polymerization process, and/or a gas phase polymerization process. The polymerization process may utilize using known equipment and reaction conditions, e.g., known polymerization conditions. The polymerization process is not limited to any specific type of polymerization system. The polymer can be utilized for a number of articles such as films, fibers, nonwoven and/or woven fabrics, extruded articles, and/or molded articles.

One or more embodiments provide that the polymers are made utilizing a gas-phase reactor system. One or more embodiments provide that a single gas-phase reactor, e.g., in contrast to a series of reactors, is utilized. In other words, polymerization reaction occurs in only one reactor. For instance, the polymers can be made utilizing a fluidized bed reactor. Gas-phase reactors are known and known components may be utilized for the fluidized bed reactor.

As used herein an "olefin," which may be referred to as an "alkene," refers to a linear, branched, or cyclic compound including carbon and hydrogen and having at least one double bond. As used herein, when a polyolefin, polymer, and/or copolymer is referred to as comprising, e.g., being made from, an olefin, the olefin present in such polymer or copolymer is the polymerized form of the olefin. For example, when a copolymer is said to have an ethylene content of 75 wt% to 95 wt%, it is understood that the polymer unit in the copolymer is derived from ethylene in the polymerization reaction(s) and the derived units are present at 75 wt% to 95 wt%, based upon the total weight of the polymer. A higher $\alpha$-olefin refers to an $\alpha$-olefin having 3 or more carbon atoms.

Polyolefins made with the spray-dried hafnium metallocene compositions disclosed herein can made from olefin monomers such as ethylene, i.e., polyethylene, and linear or branched higher alpha-olefin monomers containing 3 to 20 carbon atoms. Examples of higher alpha-olefin monomers include, but are not limited to, propylene, butene, pentene, 1-hexene, and 1-octene. Examples of polyolefins include ethylene-based polymers, having at least 50 wt % ethylene, including ethylene-1-butene, ethylene-1-hexene, and ethylene-1-octene copolymers, among others. One or more embodiments provide that the polymer can include from 50 to 99.9 wt % of units derived from ethylene based on a total weight of the polymer. All individual values and subranges from 50 to 99.9 wt % are included; for example, the polymer can include from a lower limit of 50, 60, 70, 80, or 90 wt % of units derived from ethylene to an upper limit of 99.9, 99.7, 99.4, 99, 96, 93, 90, or 85 wt % of units derived from ethylene based on the total weight of the polymer. The polymer can include from 0.1 to 50 wt % of units derived from comonomer based on the total weight of the polymer. One or more embodiments provide that ethylene is utilized as a monomer and hexene is utilized as a comonomer.

As mentioned, the polymers made with the spray-dried hafnium metallocene compositions disclosed herein can

be made in a fluidized bed reactor. The fluidized bed reactor can have a reaction temperature from 10 to 130 °C. All individual values and subranges from 10 to 130 °C are included; for example, the fluidized bed reactor can have a reaction temperature from a lower limit of 10, 20, 30, 40, 50, or 55°C to an upper limit of 130, 120, 110, 100, 90, 80, 70, or 60°C.

The fluidized bed reactor can have an ethylene partial pressure from 0.21 MPa to 1.72 MPa (30 to 250 pounds per square inch (psi)). All individual values and subranges from 0.21 to 1.72 MPa (30 to 250) are included; for example, the fluidized bed reactor can have an ethylene partial pressure from a lower limit of 0.21 (30), 0.31 (45), 0.41 (60), 0.52 (75), 0.59 (85), 0.62 (90), or 0.66 MPa (95) psi to an upper limit of 1.72 (250), 1.65 (240), 1.52 (220), 1.38 (200), 1.03 (150), or 0.86 (125) psi.

One or more embodiments provide that ethylene is utilized as a monomer and hexene is utilized as a comonomer. The fluidized bed reactor can have a comonomer to ethylene mole ratio, e.g., $C_6/C_2$, from 0.0001 to 0.100. All individual values and subranges from 0.0001 to 0.100 are included; for example, the fluidized bed reactor can have a comonomer to ethylene mole ratio from a lower limit of 0.0001, 0.0005, 0.0007, 0.001, 0.0015, 0.002, 0.007, or 0.010 to an upper limit of 0.100, 0.080, or 0.050.

When hydrogen is utilized for a polymerization process, the fluidized bed reactor can have a hydrogen to ethylene mole ratio ($H_2/C_2$) from 0.00001 to 0.90000, for instance. All individual values and subranges from 0.00001 to 0.90000 are included; for example, the fluidized bed reactor can have a $H_2/C_2$ from a lower limit of 0.00001, 0.00005, or 0.00008 to an upper limit of 0.90000, 0.500000, 0.10000, 0.01500, 0.00700, or 0.00500. One or more embodiments provide that hydrogen is not utilized.

A number of polymer properties may be determined utilizing Gel Permeation Chromatography. For instance, weight average molecular weight (Mw), number average molecular weight (Mn), Z-average molecular weight (Mz), and Mw/Mn (PDI) were determined using a High Temperature Gel Permeation Chromatography (Polymer Laboratories), equipped with a differential refractive index detector (DRI); 3 columns (Polymer Laboratories PLgel 10μm Mixed-B) were used. The nominal flow rate was 1.0 mL/min, and the nominal injection volume was 300 μL. Transfer lines, columns, and differential refractometer (the DRI detector) were contained in an oven maintained at 160 °C. Solvent was prepared by dissolving butylated hydroxytoluene (6 grams) as an antioxidant in 4 liters of Aldrich reagent grade 1, 2, 4 trichlorobenzene (TCB). The TCB mixture was then filtered through a 0.1 μm Teflon filter. The TCB was then degassed with an online degasser before entering the GPC instrument. Polymer solutions were prepared by placing dry polymer in glass vials, adding a desired amount of TCB, then heating the mixture at 160°C with continuous shaking for approximately 2 hours. All quantities were measured gravimetrically. The injection concentration was from 0.5 to 2.0 mg/ml, with lower concentrations being used for higher molecular weight samples. Prior to running each sample the DRI detector was purged. The flow rate in the apparatus was then increased to 1.0 ml/minute, and the DRI was allowed to stabilize for 8 hours before injecting the first sample. The molecular weight was determined by combining universal calibration relationship with the column calibration which is performed with a series of monodispersed polystyrene (PS) standards. The Mw was calculated at each elution volume with following equation:

$$\log M_X = \frac{\log(K_X / K_{PS})}{a_X + 1} + \frac{a_{PS} + 1}{a_X + 1} \log M_{PS}$$

where the variables with subscript "X" stand for the test sample while those with subscript "PS" stand for PS. For calculations,

$$a_{PS} = 0.67$$

$$K_{PS} = 0.000175$$

$a_X$ and $K_X$ were obtained from published literature (a/K = 0.695/0.000579 for PE and 0.705/0.0002288 for PP).

The concentration, c, at each point in the chromatogram was calculated from the baseline-subtracted DRI signal, IDRI, using the following equation:

c = KDRIIDRI /(dn/dc)

where KDRI is a constant determined by calibrating the DRI, and (dn/dc) is the refractive index increment for the system. Specifically, dn/dc = 0.109 for polyethylene.

The mass recovery was calculated from the ratio of the integrated area of the concentration chromatography over elution volume and the injection mass which is equal to the pre-determined concentration multiplied by injection loop volume.

All molecular weights are reported in g/mol unless otherwise noted.

The comonomer content, e.g., 1-hexene, incorporated in the polymers was determined by rapid FT-IR spectroscopy on the dissolved polymer in a GPC measurement. Comonomer content was determined with respect to polymer molecular weight by use of an infrared detector (an IR5 detector) in a gel permeation chromatography measurement, as described in Analytical Chemistry 2014, 86(17), 8649-8656. "Toward Absolute Chemical Composition Distribution Measurement of Polyolefins by High-Temperature Liquid Chromatography Hyphenated with Infrared Absorbance and Light Scattering Detectors" by Dean Lee, Colin Li Pi Shan, David M. Meunier, John W. Lyons, Rongjuan Cong, and A. Willem deGroot. Analytical Chemistry 2014 86 (17), 8649-8656.

The comonomer distribution, or short chain branching distribution, in an ethylene/α-olefin copolymer can be characterized as either normal (also referred to as having a Zeigler-Natta distribution), reverse, or flat. Several reported methods are utilized to quantify a Broad Orthogonal Composition Distribution (BOCD). Herein, a simple line fit is utilized such that the normal or reverse nature of the comonomer distribution can be quantified by the molecular weight comonomer distribution index (MWCDI), which is the slope of the linear regression of the comonomer distribution taken from a compositional GPC measurement, wherein the x-axis is Log(MW) and the y-axis is weight percent of comonomer. Figure 1 shows MWCDI for Example 1 (MWCDI = 0.50) and Comparative Example A (MWCDI = 0.06) of the Examples section of the present application. A reverse comonomer distribution is defined when the MWCDI > 0 and a normal comonomer distribution is defined when the MWCDI < 0. When the MWCDI = 0 the comonomer distribution is said to be flat. Additionally, the MWCDI quantifies the magnitude of the comonomer distribution. Comparing two polymers that have MWCDI > 0, the polymer with the greater MWCDI value is defined to have a greater, i.e., increased, BOCD; in other words, the polymer with the greater MWCDI value has a greater reverse comonomer distribution. For instance, as reported in Table 1, Example 1 (MWCDI = 0.50) has an increased BOCD as compared to Comparative Example A (MWCDI = 0.06), where both Example 1 and Comparative Example A have a density that is ± 0.01 g/cm$^3$ of one another. Polymers with a relatively greater MWCDI, i.e. BOCD, can provide improved physical properties, such as improved film performance, as compared to polymers having a relatively lesser MWCDI.

The polymers made with the spray-dried hafnium metallocene compositions disclosed herein can have a MWCDI from 0.08 to 5.00. All individual values and subranges from 0.08 to 5.00 are included; for example, the polymer can have a MWCDI from a lower limit of 0.08, 0.10, or 0.30 to an upper limit of 5.00, 4.00, 3.00, 2.50, 2.35, or 2.00.

The polymers made with the spray-dried hafnium metallocene compositions disclosed herein can have a density from 0.8700 to 0.9700 g/cm$^3$. All individual values and subranges from 0.8700 to 0.9700 g/cm$^3$ are included; for example, the polymer can have a density from a lower limit of 0.8700, 0.9000, 0.9100, 0.9150, 0.9200, or 0.9250 g/cm$^3$ to an upper limit of 0.9700, 0.9600, 0.9500, 0.9450, 0.9350, or 0.9300 g/cm$^3$. Density can be determined by according to ASTM D792.

The polymers made with the spray-dried hafnium metallocene compositions disclosed herein can have a melt index ($I_{21}$) from 0.05 to 25 dg/min. $I_{21}$ can be determined according to ASTM D1238 (190 °C, 21.6 kg). All individual values and subranges from 0.05 to 25 dg/min are included; for example, the polymer can have an $I_{21}$ from a lower limit of 0.05, 0.07 or 0.10 dg/min to an upper limit of 25, 15, or 5 dg/min. The polymers made with the spray-dried hafnium metallocene compositions disclosed herein can advantageously provide an improved, e.g. reduced, $I_{21}$ as compared to polymers having a similar density, e.g. ± 0.01 g/cm$^3$, made from other hafnium metallocenes. This improved melt index may provide improved processability for a number of applications, for instance.

The polymers made with the spray-dried hafnium metallocene compositions disclosed herein can have a weight average molecular weight (Mw) from 10,000 to 1,000,000 g/mol. All individual values and subranges from 10,000 to 1,000,000 g/mol are included; for example, the polymers can have an Mw from a lower limit of 10,000, 50,000, or 100,000 g/mol to an upper limit of 1,000,000, 800,000, or 600,000 g/mol. Mw can be determined by gel permeation chromatography (GPC), as is known in the art. GPC is discussed herein.

The polymers made with the spray-dried hafnium metallocene compositions disclosed herein can have a number average molecular weight (Mn) from 5,000 to 300,000 g/mol. All individual values and subranges from 5,000 to 300,000 g/mol are included; for example, the polymers can have an Mn from a lower limit of 5,000, 20,000, or 50,000 g/mol to an upper limit of 300,000, 275,000, or 225,000 g/mol. Mn can be determined by GPC.

The polymers made with the spray-dried hafnium metallocene compositions disclosed herein can have a Z-average molecular weight (Mz) from 40,000 to 2,000,000 g/mol. All individual values and subranges from 40,000 to 2,000,000 g/mol are included; for example, the polymers can have an Mz from a lower limit of 40,000, 100,000, or 250,000 g/mol to an upper limit of 2,000,000, 1,800,000, or 1,650,000 g/mol. Mz can be determined by GPC.

The polymers made with the spray-dried hafnium metallocene compositions disclosed herein can have a weight average molecular weight to number average molecular weight ratio (Mw/Mn) from 2.00 to 6.00. All individual values and subranges from 2.00 to 6.00 are included; for example, the polymers can have an Mw/Mn from a lower limit of 2.00, 2.50, or 3.00 to an upper limit of 6.00, 5.50, or 4.50. The polymers made with the spray-dried hafnium metallocene compositions disclosed herein can advantageously provide an improved, e.g. greater, Mw/Mn as compared to polymers having a similar density, e.g. ± 0.01 g/cm$^3$, made from other hafnium metallocenes. Not wishing to be bound by theory, polymers that have a greater Mw/Mn have advantages in energy input required for processing, such as extrusion, blowing of films and other

processes, for instance.

A number of aspects of the present disclosure are provided as follows.

Aspect 1 provides spray-dried hafnium metallocene composition comprising: a hafnium metallocene having nonidentical ligands represented by the formula $ABMX_2$ , where: A is a substituted cyclopentadienyl and B is a cyclopentadienyl, wherein substitution of the cyclopentadienyl ring of A is different than the substitution of the cyclopentadienyl ring of B; M is hafnium; and X is a leaving group; an activator; and a support.

Aspect 2 provides the spray-dried hafnium metallocene composition of aspect 1, wherein A is substituted with one alkyl having from 1 to 6 carbons.

Aspect 3 provides the spray-dried hafnium metallocene composition of any one of aspects 1-2, wherein A is substituted with one alkyl having from 2 to 4 carbons.

Aspect 4 provides the spray-dried hafnium metallocene composition of any one of aspects 1-3, wherein B is substituted with one alkyl having from 1 to 2 carbons.

Aspect 5 provides the spray-dried hafnium metallocene composition of any one of aspects 1-4, wherein the hafnium metallocene having nonidentical ligands is represented by structure (I):

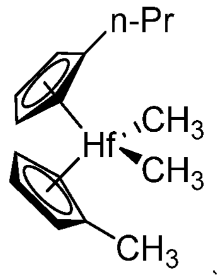

Aspect 6 provides the spray-dried hafnium metallocene composition of any one of aspects 1-5, wherein a molar ratio of metal in the activator to hafnium in the hafnium metallocene having nonidentical ligands is 1500: 1 to 0.5: 1.

Aspect 7 provides a method of making a polymer, the method comprising: contacting the spray-dried hafnium metallocene composition of any one of aspects 1-6 and an olefin under polymerization conditions to make the polymer.

Aspect 8 provides the method of aspect 7, wherein contacting the spray-dried hafnium metallocene composition and the olefin is in a single gas-phase reactor.

Aspect 9 provides the method of any one of aspects 7-8, further comprising providing a greater molecular weight comonomer distribution index (MWCDI) as compared to another polymer made from a hafnium symmetric metallocene composition, wherein the polymer made from the spray-dried hafnium metallocene composition has a density + 0.01 g/cm3 as compared to the another polymer made from the hafnium symmetric metallocene composition.

EXAMPLES

Methylcyclopentadienyllithium, which may be represented by the following formula:

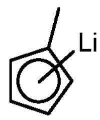

was synthesized as follows. In a glove box, an 227 g (8 oz.) glass jar was charged with methylcyclopentadiene (10.0 g, 124.8 mmol), hexanes (40 mL), and a magnetic stir bar. The mixture as stirred until material dissolved, then a solution of *n*-butyl lithium (1.6 M, 85.8 mL, 137.3 mmol) was added slowly while stirring. The contents of the jar were then allowed to stir overnight at room temperature, after which time the product was collected by vacuum filtration, washed with hexanes, and then dried in vacuo to provide methylcyclopentadienyllithium (9.993 g, 93.0% yield). $^{1}$H NMR (400 MHz, THF-d8) δ 5.49 (t, J = 2.6 Hz, 2H), 5.47 - 5.43 (m, 2H), 2.10 (d, J = 0.6 Hz, 3H). $^{13}$C NMR (101 MHz, THF-$d_8$) δ 113.50, 103.58, 102.15, 66.99, 66.77, 24.72, 15.36. Methylcyclopentadiene was obtained from Sigma-Aldrich as methylcyclopentadiene dimer and freshly cracked prior to use. *n*-butyl lithium was obtained from Sigma-Aldrich

(n-Propylcylopentadienyl)hafnium trichloride, dimethoxyethane adduct, which may be represented by the following formula:

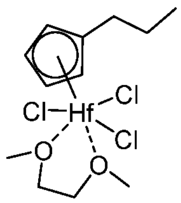

was synthesized as follows. The (n-Propylcylopentadienyl)hafnium trichloride, dimethoxyethane adduct, was synthesized by adapting the procedure described in WO2016/168448A1 by Harlan. Bis(n-propylcyclopentadienyl)hafniumdichloride (25.1 g, 54.1 mmol) was heated to 140 °C in a 100 mL round-bottom flask until melted. HfCl4 (17.5 g, 54.6 mmol) was added as a solid powder. The contents were heated at 140 °C for approximately 30 minutes and formed a brown viscous liquid. The 100 mL round bottom flask was attached to a short path distillation apparatus which consisted of a glass tube (90° bend) that was attached to a Schlenk flask. A vacuum was pulled on the assembly through the stopcock of the Schlenk flask. Distillation was performed from 105 °C to 110 °C with 53.3 Pa (0.4 torr) vacuum. Over about an hour most of the material distilled/sublimed into the Schlenk flask or remained in the glass tube. The solid material in the u-tube was scraped out and combined with the material in the Schlenk flask. To this solid was added toluene (50 mL) and dimethoxyethane (50 mL). This was heated to reflux forming a solution, additional toluene (50 mL) was added. Upon cooling colorless needles formed. Pentane (200 mL) was added causing further formation of solid precipitate. The solid was isolated by filtration, washed with pentane (2 x 50 mL) and dried under vacuum to provide (n-Propylcylopentadienyl) hafnium trichloride, dimethoxyethane adduct (42.2 g); cooling the combined supernatant and washings resulted an additional 2.6 g of product that was isolated. Total yield = 44.8 g (86%).

Hafnium metallocene having nonidentical ligands #1, having formula (I) $ABMX_2$, as discussed herein, and represented by the following structure (I):

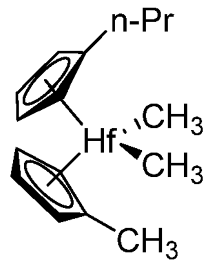

was made as follows. In a glove box, to a glass jar (113 g (4 oz.)) including dry toluene (40 mL), propylcyclopentadienyl hafnium trichloride dimethoxy ethane adduct (0.75 grams; 1.56 mmol) was added while stirring with a teflon-coated stir bar. The contents of the jar were observed to be grey and cloudy. Then, methylcyclopentadienyllithium (MeCpLi) (1 molar equivalent) was slowly added to the contents of the jar and the contents of the jar were stirred for approximately 12 hours at room temperature (approximately 20 °C). Then, the contents of the jar were filtered and volatiles were removed from filtrate under reduced pressure to provide hafnium metallocene having nonidentical ligands #1 (0.618 g; 91.2%). 1H and 13C NMR spectra confirmed the product.

1H NMR (400 MHz, Benzene-d6) δ 5.80 - 5.68 (m, 3H), 5.61 (dt, J = 5.5, 2.7 Hz, 3H), 2.64 - 2.55 (m, 2H), 2.17 (d, J = 0.6 Hz, 3H), 1.49 - 1.36 (m, 2H), 0.80 (t, J = 7.4 Hz, 3H).

13C NMR (101 MHz, Benzene-d6) δ 132.51, 116.18, 115.40, 110.75, 110.71, 32.42, 24.39, 15.37, 14.01.

Hafnium metallocene #A, having identical ligands and represented by the following formula:

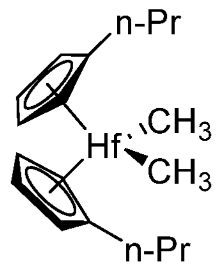

was made as follows. Bis-(n-propylcyclopentadienyl) hafnium dichloride was commercially obtained from TCI; this is readily converted to bis-(n-propylcyclopentadienyl) hafnium dimethyl by someone skilled in the art by reaction with a methylating agent, such as a Grignard reagent, for example, methylmagnesium bromide.

Polymer was made utilizing Example 1, a spray-dried hafnium metallocene composition, as follows. A spray-dried methylaluminoxane (MAO) was prepared as follows (as described in US Patent No. 8,497,330; See column 22, lines 48-97; with any changes indicated). Sieved toluene (342 Kg (754 lbs)), 10% solution of MAO in toluene (223 Kg (491 lbs)), and Cabosil TS620 (31 Kg (69 lbs)) were added to a 1022 litre (270 gallon) feed tank and mixed for 1 hour at 40 °C. The contents of the feed tank were then introduced to an atomizing device to produce droplets that were contacted with a gas stream to evaporate the liquid, thereby forming the spray-dried methylaluminoxane, that was observed to be a powder. The spray-dried methylaluminoxane (14 wt%) was combined with hexane (10 wt%) and Hydrobite 380 mineral oil (76 wt%) to make a spray-dried slurry. Hafnium metallocene having nonidentical ligands #1 (0.04 wt %), hexane (4.00 wt %), and isopentane (95.96 wt %) were combined to make a metallocene solution. Ethylene, 1-hexene, and hydrogen were fed to a fluidized bed gas phase reactor comprising a bed of polyethylene granules. The spray-dried slurry (20 ml/hr) was fed to the reactor through a catalyst injection line (0.48 cm (3/16 inch)) utilizing a syringe pump. Isopentane (1.4 kg/hr) was added by the catalyst injection line after the pump. The metallocene solution (141 g/hr) was added by catalyst injection line after the isopentane and through a helical static mixer (0.48 cm (3/16 inch)) to make Example 1, a spray-dried hafnium metallocene composition. After the mixer, nitrogen (2.3 kg/hr) was added to the catalyst injection line. The catalyst injection line was reduced to 0.32 cm (1/8 inch) and entered the reactor through an outer tube (0.64 cm (1/4 inch)). Additional nitrogen (4.1 kg/hr) and isopentane (5.0 kg/hr) were added through the outer tube. Polymerization was continuously conducted, after equilibrium was reached, under the conditions, as shown in Table 1. Polymerization was initiated by continuously feeding the spray-dried slurry and metallocene solution into a fluidized bed of polyethylene granules, together with the ethylene, 1-hexene and hydrogen. Continuity additive CA-300 (may be obtained from Univation Technologies, LLC, Houston, Texas, USA) was also fed to the reactor as a 20 weight% solution in mineral oil at a feed rate of 2.0 milliliters per hour (ml/hour). Inert gases, nitrogen and isopentane, made up the remaining pressure in the reactor. The product was continuously removed to maintain a constant bed weight of polymer in the reactor. The resulting mixture was washed with water and methanol, and dried. Polymerization conditions are utilized to provide polymers having a density of of approximately 0.9300 g/cm$^3$. Polymerization conditions are reported in Table 1.

Polymer was made utilizing Comparative Example A, a spray-dried symmetric hafnium metallocene composition, as follows. Comparative A was prepared as described in US Patent No. 8,497,330; See column 22, lines 48-97; with the change that Hafnium metallocene #A, as described above, was utilized. Comparative Example A (16 wt %) was combined with Hydrobite 380 mineral oil to make a spray-dried slurry. Ethylene, 1-hexene, and hydrogen were fed to a fluidized bed gas phase reactor comprising a bed of polyethylene granules. The spray-dried slurry (20 ml/hr) was fed to the reactor through a catalyst injection line (0.48 cm (3/16 inch)) utilizing a syringe pump. Isopentane (1.4 kg/hr) was added by the catalyst injection line after the pump and through a helical static mixer (0.48 cm (3/16 inch)). After the mixer, nitrogen (2.3 kg/hr) was added to the catalyst injection line. The catalyst injection line was reduced to 0.32 cm (1/8 inch) and entered the reactor through an outer tube (0.64 cm (1/4 inch)). Additional nitrogen (4.1 kg/hr) and isopentane (5.0 kg/hr) were added through the outer tube. Polymerization was continuously conducted, after equilibrium was reached, under the conditions, as shown in Table 1. Polymerization was initiated by continuously feeding the spray-dried slurry into a fluidized bed of polyethylene granules, together with the ethylene, 1-hexene and hydrogen. Continuity additive CA-300 (may be obtained from Univation Technologies, LLC, Houston, Texas, USA) was also fed to the reactor as a 20 weight% solution in mineral oil at a feed rate of 2.0 milliliters per hour (ml/hour). Inert gases, nitrogen and isopentane, made up the remaining pressure in the reactor. The product was continuously removed to maintain a constant bed weight of polymer in the reactor. The resulting mixture was washed with water and methanol, and dried. Polymerization conditions are utilized to provide polymers having a density of of approximately 0.9300 g/cm$^3$. Polymerization conditions are reported in Table 1.

A number of properties were determined for polymers made with Example 1 and Comparative Example A, the results are reported in Table 1. Catalyst productivity (kgs polymer/kgs catalyst (lbs polymer/lbs catalyst)) was determined as a ratio of polymer produced to an amount of catalyst added to the reactor. Density was determined according to ASTM D792; melt index ($I_{21}$) was determined according to ASTM D1238 (190 °C, 21.6 kg); Mw, Mn, Mz, and Mw/Mn were determined by GPC; molecular weight comonomer distribution index (MWCDI) was determined as discussed herein.

Table 1

| | Example 1 | Comparative Example A |
|---|---|---|
| Reaction Temp (°C) | 85 | 90 |
| Pressure (kPa) | 2405 | 2399 |
| $C_6/C_2$ | 0.0028 | 0.0028 |
| $H_2/C_2$ | 0.00003 | 0.00016 |
| $C_2$ Partial Pressure (MPa) ((psi)) | 0.69 (100) | 0.69 (100) |
| Isopentane | 5.8 | 6.5 |

(continued)

| | Example 1 | Comparative Example A |
|---|---|---|
| (mol %) | | |
| Production rate (kg/hr) | 7.4 | 15.3 |
| Bed weight (kg) | 45.9 | 44.5 |
| Density (g/cm$^3$) | 0.9270 | 0.9306 |
| $C_6$ (weight %) | 1.95 | 1.73 |
| Mn | 131,629 | 73,499 |
| Mw | 435,616 | 217,821 |
| Mz | 1,140,739 | 495,113 |
| Mw/Mn | 3.31 | 2.96 |
| Melt Index ($I_{21}$) | 0.29 | 3.08 |
| Molecular weight comonomer distribution index | 0.50 | 0.06 |

The data of Table 1 illustrate that polymer made with Example 1 and had an improved, i.e. greater, molecular weight comonomer distribution index as compared to polymer made with Comparative Example A.

The data of Table 1 illustrate that polymer made with Example 1 had an improved, i.e. greater, Mw/Mn as compared to polymer made with Comparative Example A.

The data of Table 1 illustrate that polymer made with Example 1 had an improved, i.e. reduced, melt index ($I_{21}$) as compared to polymer made with Comparative Example A.

## Claims

**1.** A spray-dried hafnium metallocene composition comprising:

a hafnium metallocene having nonidentical ligands represented by formula (I) $ABMX_2$ , where: A is a substituted cyclopentadienyl ring that is substituted with only one alkyl having from 1 to 3 carbons and B is a substituted cyclopentadienyl ring that is substituted with only one alkyl having from 1 to 2 carbons, wherein substitution of the cyclopentadienyl ring of A is different than the substitution of the cyclopentadienyl ring of B; M is hafnium; and X is a leaving group selected from halogen ions, hydrides, $C_1$ to $C_{12}$ alkyls, $C_2$ to $C_{12}$ alkenyls, $C_6$ to $C_{12}$ aryls, $C_7$ to $C_{20}$ alkylaryls, $C_1$ to $C_{12}$ alkoxys, $C_6$ to $C_{16}$ aryloxys, $C_7$ to $C_8$ alkylaryloxys, $C_1$ to $C_{12}$ fluoroalkyls, $C_6$ to $C_{12}$ fluoroaryls, $C_1$ to $C_{12}$ heterotaom-containing hydrocarbons and substituted derivatives thereof, amines, phosphines, ethers,carboxylates, dienes, hydrocarbon radicals having from 1 to 20 carbon atoms, fluorinated hydrocarbon radicals, fluorinated alkylcarboxylates, and combinations thereof;

an activator selected from a Lewis acid, a non-coordinating ionic activator, an ionizing activator, a Lewis base, aluminum alkyls and conventional-type-co-catalysts; and

a support selected from a porous support material, inorganic oxides, and inorganic chlorides.

**2.** The spray-dried hafnium metallocene composition of claim 1, wherein A is substituted with an alkyl substituent selected from methyl, ethyl, n-propyl, and i-propyl.

**3.** The spray-dried hafnium metallocene composition of any one of claims 1-2, wherein the hafnium metallocene having nonidentical ligands is represented by structure (I):

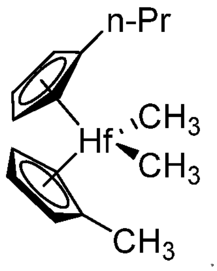

4. The spray-dried hafnium metallocene composition of any one of claims 1-3, wherein a molar ratio of metal in the activator to hafnium in the hafnium metallocene having nonidentical ligands is be 1500: 1 to 0.5: 1.

5. A method of making a polymer, the method comprising:
contacting the spray-dried hafnium metallocene composition of any one of claims 1-4 and an olefin under polymerization conditions to make the polymer.

6. The method of claim 5, wherein contacting the spray-dried hafnium metallocene composition and the olefin is in a single gas-phase reactor.

7. The method of any one of claims 5-6, further comprising providing a greater molecular weight comonomer distribution index (MWCDI) as compared to another polymer made from a hafnium symmetric metallocene composition, wherein the polymer made from the spray-dried hafnium metallocene composition has a density difference of $\pm$ 0.01 g/cm$^3$ as compared to the another polymer made from the hafnium symmetric metallocene composition.

**Patentansprüche**

1. Sprühgetrocknete Hafnium-Metallocen-Zusammensetzung, umfassend:

ein Hafniummetallocen, das nichtidentische Liganden aufweist, dargestellt durch Formel (I) $ABMX_2$, worin: A ein substituierter Cyclopentadienylring ist, der mit nur einem Alkyl, das von 1 bis 3 Kohlenstoffe aufweist, substituiert ist, und B ein substituierter Cyclopentadienylring ist, der mit nur einem Alkyl, das von 1 bis 2 Kohlenstoffe aufweist, substituiert ist, wobei die Substitution des Cyclopentadienylrings von A sich von der Substitution des Cyclopentadienylrings von B unterscheidet; M Hafnium ist; und X eine Abgangsgruppe ist, ausgewählt aus Halogenionen, Hydriden, $C_1$- bis $C_{12}$-Alkylen, $C_2$- bis $C_{12}$-Alkenylen, $C_6$- bis $C_{12}$-Arylen, $C_7$- bis $C_{20}$-Alkylarylen, $C_1$- bis $C_{12}$-Alkoxy, $C_6$- bis $C_{16}$-Aryloxy, $C_7$- bis $C_8$-Alkylaryloxy, $C_1$- bis $C_{12}$-Fluoralkylen, $C_6$- bis $C_{12}$-Fluorarylen, heterotomathaltigen $C_1$- bis $C_{12}$-Kohlenwasserstoffen und substituierten Derivaten davon, Aminen, Phosphinen, Ethern, Carboxylaten, Dienen, Kohlenwasserstoffresten, die von 1 bis 20 Kohlenstoffatome aufweisen, fluorierten Kohlenwasserstoffresten, fluorierten Alkylcarboxylaten und Kombinationen davon;
einen Aktivator, ausgewählt aus einer Lewis-Säure, einem nichtkoordinierenden ionischen Aktivator, einem ionisierenden Aktivator, einer LewisBase, Aluminiumalkylen und Co-Katalysatoren vom herkömmlichen Typ; und
einen Träger, ausgewählt aus einem porösen Trägermaterial, anorganischen Oxiden und anorganischen Chloriden.

2. Sprühgetrocknete Hafnium-Metallocen-Zusammensetzung nach Anspruch 1, wobei A mit einem Alkylsubstituenten substituiert ist, ausgewählt aus Methyl, Ethyl, n-Propyl und i-Propyl.

3. Sprühgetrocknete Hafnium-Metallocen-Zusammensetzung nach einem der Ansprüche 1 bis 2, wobei das Hafnium-Metallocen, das nichtidentische Liganden aufweist, durch die Struktur (I) dargestellt wird:

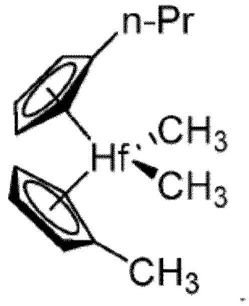

4. Sprühgetrocknete Hafnium-Metallocen-Zusammensetzung nach einem der Ansprüche 1 bis 3, wobei ein Molverhältnis von Metall in dem Aktivator zu Hafnium in dem Hafnium-Metallocen, das nicht identische Liganden aufweist, 1500 : 1 bis 0,5 : 1 beträgt.

5. Verfahren zum Herstellen eines Polymers, das Verfahren umfassend:
Inkontaktbringen der sprühgetrockneten Hafnium-Metallocen-Zusammensetzung nach einem der Ansprüche 1 bis 4 und eines Olefins unter Polymerisationsbedingungen, um das Polymer herzustellen.

6. Verfahren nach Anspruch 5, wobei das Inkontaktbringen der sprühgetrockneten Hafnium-Metallocen-Zusammensetzung und des Olefins in einem einzigen Gasphasenreaktor erfolgt.

7. Verfahren nach einem der Ansprüche 5 bis 6, ferner umfassend ein Bereitstellen eines höheren Comonomer-Molekulargewichtsverteilungsindex (MWCDI) im Vergleich zu einem anderen Polymer, das aus einer symmetrischen Hafnium-Metallocen-Zusammensetzung hergestellt ist, wobei das Polymer, das aus der sprühgetrockneten Hafnium-Metallocen-Zusammensetzung hergestellt ist, einen Dichteunterschied von $\pm$ 0,01 g/cm$^3$ im Vergleich zu einem anderen Polymer, das aus der symmetrischen Hafnium-Metallocen-Zusammensetzung hergestellt ist, aufweist.

**Revendications**

1. Composition de métallocène d'hafnium séchée par pulvérisation comprenant :

un métallocène d'hafnium ayant des ligands non identiques représentés par la formule (I) $ABMX_2$, où : A est un cycle cyclopentadiényle substitué qui est substitué par un seul alkyle ayant de 1 à 3 carbones et B est un cycle cyclopentadiényle substitué qui est substitué par un seul alkyle ayant de 1 à 2 carbones, dans laquelle la substitution du cycle cyclopentadiényle de A est différente de la substitution du cycle cyclopentadiényle de B ; M est l'hafnium ; et X est un groupe partant choisi parmi ions halogènes, hydrures, alkyles en $C_1$ à $C_{12}$, alcényles en $C_2$ à $C_{12}$, aryles en $C_6$ à $C_{12}$, alkylaryles en $C_7$ à $C_{20}$, alcoxy en $C_1$ à $C_{12}$, aryloxy en $C_6$ à $C_{16}$, alkylaryloxy en $C_7$ à $C_8$, fluoroalkyles en $C_1$ à $C_{12}$, fluoroaryles en $C_6$ à $C_{12}$, hydrocarbures en $C_1$ à $C_{12}$ à teneur en hétéroatome et leurs dérivés substitués, amines, phosphines, éthers, carboxylates, diènes, radicaux hydrocarbonés ayant de 1 à 20 atomes de carbone, radicaux hydrocarbonés fluorés, alkylcarboxylates fluorés, et leurs combinaisons ;
un activateur choisi parmi un acide de Lewis, un activateur ionique non coordonnant, un activateur ionisant, une base de Lewis, des alkyles d'aluminium et des co-catalyseurs de type classique ; et
un support choisi parmi un matériau de support poreux, des oxydes inorganiques, et des chlorures inorganiques.

2. Composition de métallocène d'hafnium séchée par pulvérisation selon la revendication 1, dans laquelle A est substitué par un substituant alkyle choisi parmi méthyle, éthyle, n-propyle, et i-propyle.

3. Composition de métallocène d'hafnium séchée par pulvérisation selon l'une quelconque des revendications 1 à 2, dans laquelle le métallocène d'hafnium ayant des ligands non identiques est représenté par la structure (I) :

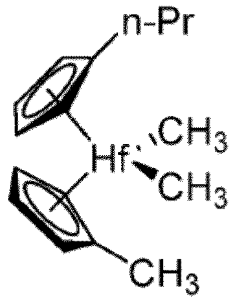

**4.** Composition de métallocène d'hafnium séchée par pulvérisation selon l'une quelconque des revendications 1 à 3, dans laquelle un rapport molaire entre le métal dans l'activateur et l'hafnium dans le métallocène d'hafnium ayant des ligands non identiques est de 1 500 : 1 à 0,5 : 1.

**5.** Procédé de préparation d'un polymère, ledit procédé comprenant :
la mise en contact de la composition de métallocène d'hafnium séchée par pulvérisation selon l'une quelconque des revendications 1 à 4 et d'une oléfine dans des conditions de polymérisation pour préparer le polymère.

**6.** Procédé selon la revendication 5, dans lequel la mise en contact de la composition de métallocène d'hafnium séchée par pulvérisation et de l'oléfine se fait dans un seul réacteur en phase gazeuse.

**7.** Procédé selon l'une quelconque des revendications 5 à 6, comprenant en outre l'obtention d'un indice de distribution de comonomère pondéré moléculaire (MWCDI) supérieur à celui d'un autre polymère préparé à partir d'une composition de métallocène symétrique d'hafnium, dans lequel le polymère préparé à partir de la composition de métallocène d'hafnium séchée par pulvérisation a une différence de masse volumique de $\pm$ 0,01 g/$cm^3$ par rapport à l'autre polymère préparé à partir de la composition de métallocène symétrique d'hafnium.

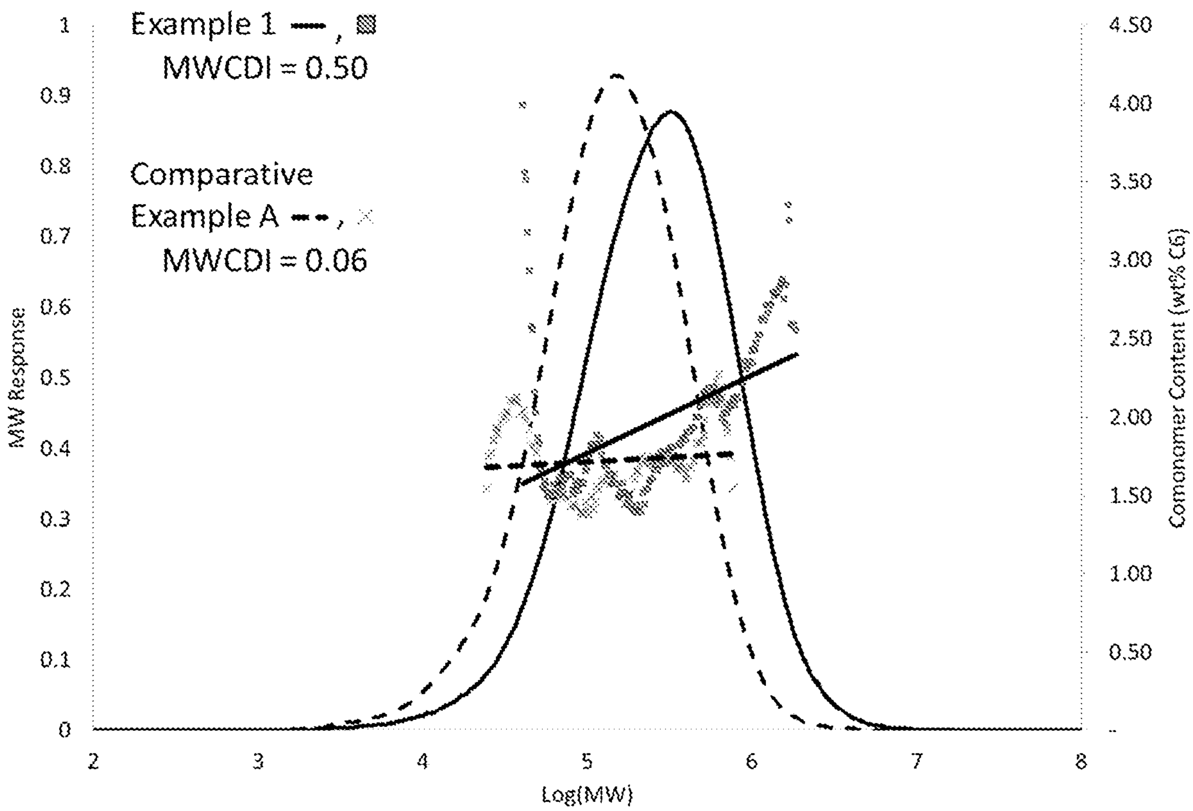
Example 1 ━━ , ▩
MWCDI = 0.50
Comparative Example A ━ ━ , ×
MWCDI = 0.06
MW Response
Comonomer Content (wt% C6)
Log(MW)
1
0.9
0.8
0.7
0.6
0.5
0.4
0.3
0.2
0.1
0
4.50
4.00
3.50
3.00
2.50
2.00
1.50
1.00
0.50
2
3
4
5
6
7
8

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011130531 A
- WO 2016145179 A
- EP 3105259 A
- WO 2016168448 A1, Harlan
- US 8497330 B

### Non-patent literature cited in the description

- HAWLEY'S CONDENSED CHEMICAL DICTIONARY. John Wiley & Sons, Inc., 1997
- *Analytical Chemistry*, 2014, vol. 86 (17), 8649-8656
- **DEAN LEE** ; **COLIN LI PI SHAN** ; **DAVID M. MEUNIER** ; **JOHN W. LYONS** ; **RONGJUAN CONG** ; **A. WILLEM DEGROOT.** Toward Absolute Chemical Composition Distribution Measurement of Polyolefins by High-Temperature Liquid Chromatography Hyphenated with Infrared Absorbance and Light Scattering Detectors. *Analytical Chemistry*, 2014, vol. 86 (17), 8649-8656